# EUROPEAN PATENT SPECIFICATION

(11) **EP 1 982 438 B1**
(45) Date of publication and mention of the grant of the patent: **23.07.2014**
(21) Application number: 07708817.7
(22) Date of filing: 07.02.2007
(51) Int. Cl.: H04W 74/00, H04W 28/06, H04W 72/02, H04W 74/08, H04W 72/04, H04W 74/02

(54) **METHOD FOR AVOIDING COLLISION USING IDENTIFIER IN MOBILE NETWORK**
VERFAHREN ZUM VERMEIDEN VON KOLLISIONEN ÜBER EINEN IDENTIFIKATOR IN EINEM MOBILEN NETZWERK
PROCÉDÉ POUR EMPÊCHER UNE COLLISION AU MOYEN D'UN IDENTIFICATEUR DANS UN RÉSEAU MOBILE

(30) Priority: 07.02.2006 US 771305 P; 11.09.2006 KR 20060087372
(43) Date of publication of application: 22.10.2008
(73) Proprietor: LG Electronics Inc., Seoul, 150-721 (KR)
(72) Inventor: PARK, Sung-jun c/o LG R&D Complex, Anyang-si Gyeongki-do 431-749 (KR); LEE, Young Dae c/oLG R&D Complex, Anyang-si Gyeongki-do 431-749 (KR); CHUN, Sung Duck c/o LG R&D Complex, Anyang-si Gyeongki-do 431-749 (KR); JUNG, Myung-cheul c/o LG R&D Complex, Anyang-si Gyeongki-do 431-749 (KR)
(74) Representative: Urner, Peter
(86) International application number: PCT/KR2007/000667
(87) International publication number: WO 2007/091841

(56) References cited:
- EP-B1- 0 617 875
- WO-A1-2004/100598
- US-A1- 2002 071 480
- US-A1- 2003 223 452
- US-A1- 2005 041 573
- US-B1- 6 597 675

## Description

### Technical Field

The present invention is directed to a mobile network and, specifically, to a method for avoiding collision among transmissions in a mobile network.

### Background Art

A third generation partnership project (3GPP) mobile system based on a wideband code division multiple access (WCDMA) radio access technology has been widely developed all over the world. A high-speed downlink packet access (HSDPA), which is a first step in the evolution of the WCDMA, provides the 3GPP with a radio access technology having high competitiveness. However, since radio access technology has been continuously developed in view of requirements and expectations of users and providers, evolution of a new technology in the 3GPP is required to increase competitiveness.

Accordingly, "Evolved UTRA and UTRAN" has been studied for the purpose of developing a wireless transmission technology that can significantly reduce cost while providing a high-quality service. The 3G long-term evolution (LTE) aims to reduce cost of a user and a provider and improve service quality as well as expanded coverage and system capacity improvement. The 3G LTE requires reduced cost per bit, increased service availability, flexible use of a frequency band, a simple structure and an open interface, and adequate power consumption of a terminal as an upper-level requirement,

Generally, one Node-B is deployed in one cell. A plurality of user equipment (UE) may be located in one cell. The user equipment must perform a random access process for access to a network.

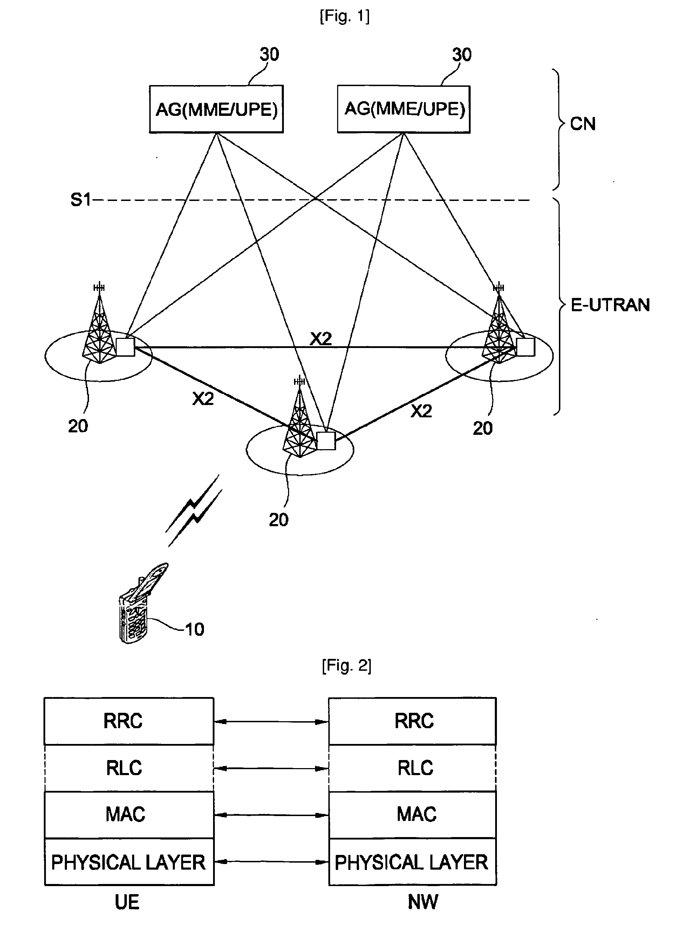

FIG. 1 is a block diagram illustrating a communication network, such as a network structure of an evolved universal mobile telecommunication system (E-UMTS). The E-UMTS may be also referred to as an LTE system. The communication network is widely deployed so as to provide a variety of communication services such as sound and packet data.

As illustrated in FIG. 1, the E-UMTS network includes an evolved UMTS terrestrial radio access network (E-UTRAN) and a core network (CN). The E-UTRAN may include one or more evolved Node-B (eNode-B) 20. The CN may include a node for registering a user of a user equipment (UE) 10 and one or more E-UTRAN access gateway (AG) 30 positioned at the end of the network and connected to an external network.

As used herein, "downlink" refers to communication from an eNode-B 20 to the UE 10 and "uplink" refers to communication from the UE to an eNode-B. The UE 10 refers to communication equipment carried by a user and may be also be referred to as a mobile station (MS), a user terminal (UT), a subscriber station (SS) or a wireless device.

An eNode-B 20 provides end points of a user plane and a control plane to the UE 10. An AG 30 provides an end point of a session and mobility management function for the UE 10. An eNode-B 20 and an AG 30 may be connected via an S1 interface.

An eNode-B 20 is generally a fixed station that communicates with a UE 10 and may also be referred to as a base station (BS) or an access point. One eNode-B 20 may be deployed per cell. An interface for transmitting user traffic or control traffic may be used between eNode-Bs 20.

An AG 30 is also referred to as a mobility management entity/user plane entity (MME/UPE). An AG 30 may be classified into a portion for performing a user traffic process and a portion for performing a control traffic process. New communication may be performed between an AG 30 for performing the user traffic process and an AG for performing the control traffic process using a new interface.

An interface for distinguishing between the E-UTRAN and the CN may be used. A plurality of nodes may be connected between an eNode-B 20 and an AG 30 via the S1 interface. The eNode-Bs 20 may be connected to each other via an X2 interface and neighboring eNode-Bs 20 may always have a meshed network structure that has the X2 interface.

Layers of radio interface protocol between the UE 10 and the network may be classified into a first layer L1, a second layer L2 and a third layer L3 based on three lower-level layers of an open system interconnection (OSI) reference model that is widely known in communication networks. A physical layer belonging to the first layer provides an information transfer service using a physical channel. A radio resource control (RRC) layer belonging to the third layer serves to control radio resources between the UE 10 and the network. The UE and the network exchange an RRC message via the RRC layer.

The RRC layer may be located in a network node of an eNode-B 20 or AG 30. Alternatively, the RRC layer may be located at an eNode-B 20 or AG 30.

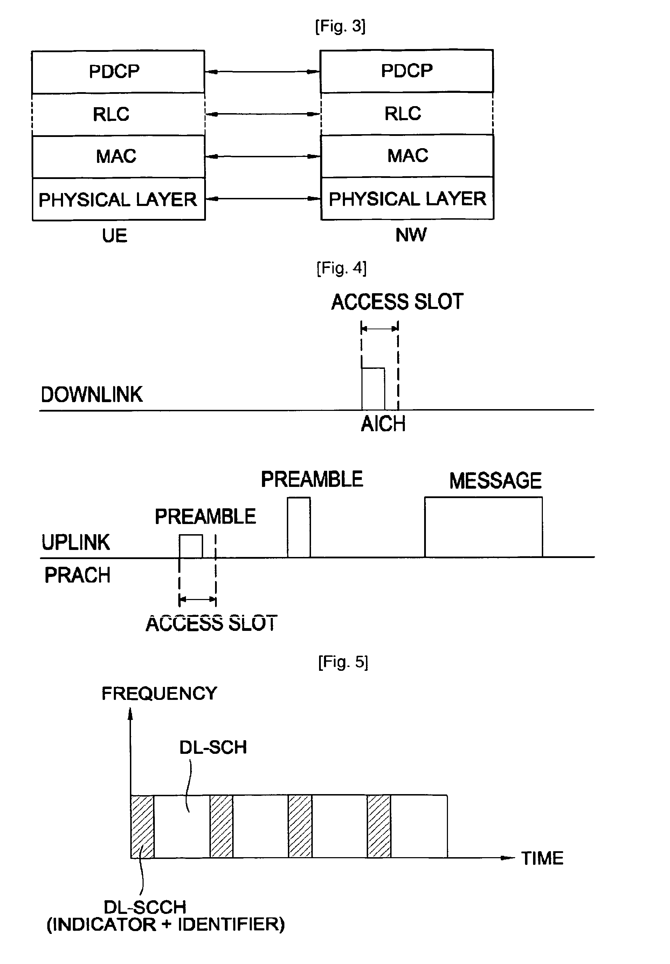

The radio interface protocol horizontally includes a physical layer, a data link layer and a network layer and vertically a user plane for transmitting data information and a control plane for transmitting a control signal. FIG. 2 is a block diagram illustrating the control plane of the radio interface protocol. FIG. 3 is a block diagram illustrating the user plane of the radio interface protocol. FIGS. 2 and 3 illustrate the structure of the radio interface protocol between the UE 10 and the E-UTRAN based on a radio access network standard.

As illustrated in FIGS. 2 and 3, the physical layer provides an information transfer service to an upper-level layer using a physical channel. The physical layer is connected to a medium access control (MAC) layer, which is an upper-level layer, via a transport channel.

Data is transferred between the MAC layer and the physical layer via the transport channel. Data is transferred between different physical layers, such as, a physical layer for a transmitter and a physical layer for a receiver, via a physical channel.

The MAC layer, which belongs to the second layer, provides a service to a radio link control (RLC) layer, which is an upper-level layer, via a logical channel. The RLC layer, which belongs to the second layer, supports reliable data transmission. It should be noted that the RLC layer is depicted in dotted lines, because if the RLC functions are implemented in and performed by the MAC layer, the RLC layer itself may not need to exist.

A packet data convergence protocol (PDCP) layer, which belongs to the second layer, performs a header compression function to reduce the size of an Internet Protocol (IP) packet header that includes unnecessary control information and has a relatively large size. In this way, efficient transmission of packets in a radio section having a narrow bandwidth may be facilitated when transmitting an IP packet, such as an IPv4 packet or an IPv6 packet.

The Radio Resource Control (RRC) layer, which belongs to the third layer, is defined in only the control plane. The RRC layer serves to control the logical channel, the transport channel and the physical channels in association with configuration, reconfiguration and release of radio bearers. A radio bearer is a service provided by the second layer for data transmission between the UE 10 and E-UTRAN.

A downlink transport channel for transmitting data from the network to the UE 10 includes a broadcast channel (BCH) for transmitting system information and a downlink shared channel (SCH) and shared control channel (SCCH) for transmitting the user traffic or a control message. The traffic or the control message of a downlink multicast service or broadcast service may be transmitted via the downlink SCH or a additional multicast channel (MCH).

An uplink transport channel for transmitting data from the UE 10 to the network includes a random access channel (RACH) for transmitting an initial control message and an uplink shared channel (SCH) and shared control channel (SCCH) for transmitting the user traffic or the control message. The RACH for transmitting the initial control message from the UE 10 to the network will now be described.

The random access process is performed via a random access channel (RACH) that is an uplink transport channel. The user equipment transmits an initial control message to the network via the RACH. The RACH is used to synchronize the user equipment with the network and to acquire radio resources when the user equipment needs to transmit data but has no uplink radio resources for transmitting the data.

More than one user equipment may try to acquire the same radio resources via the RACH. When this occurs, more than one user equipment may simultaneously transmit messages using the same radio resources. The messages may collide with each other and their transmission may fail.

A user equipment that fails to transmit a message uses the RACH again after a predetermined time elapses. Data transmission time may significantly increase due to collisions and radio resources may be wasted due to re-access.

WO 2004/100598 A1 describes a fast setup of physical communication channels in a CDMA-based communication system, wherein a Node B of a telecommunication network is permitted to manage and assign a certain share of the downlink transmission resources of a radio network controller and specifies a certain amount of resources to be allocated to a user equipment having sent a resource request message.

### Disclosure of Invention

### Technical Problem

An object of the invention is to provide a method for avoiding collision among transmissions from user equipment using an identifier in a mobile network.

### Technical Solution

The object is solved by the features of the independent claims.

It is contemplated that the identifier includes one of a random identifier (random Id), a MAC identifier (MAC Id), a cell-radio network temporary identity (C-RNTI) and a packet-temporary mobile subscriber identity (P-TMSI). It is further contemplated that the data is transmitted in one of an RRC message, user data and uplink control information.

It is contemplated that the method further includes receiving a response to the data including the identifier, the indicator and a C-RNTI. It is further contemplated that the response is one of an RRS message, user data and downlink control information.

Preferably, a method for communicating information in a mobile communication system is provided. The method includes receiving a preamble over a random access channel (RACH), generating an identifier according to the preamble, generating an indicator corresponding the identifier, transmitting a response to the preamble, the response including the identifier and the indicator and receiving data transmitted using the identifier and indicator.

It is contemplated that the identifier is generated according to at least one of a signature and a RACH occasion in the preamble. It is further contemplated that the identifier includes one of a random identifier (random Id), a MAC identifier (MAC Id), a cell-radio network temporary identity (C-RNTI) and a packet-temporary mobile subscriber identity (P-TMSI).

It is contemplated that the method further includes using the identifier and indicator in the received data to determine from which mobile communication terminal the data was received. It is further contemplated that the data is received in one of an RRC message, user data and uplink control information.

It is contemplated that the method further includes transmitting a response to the data including the identifier, the indicator and a C-RNTI. It is further contemplated that the response is transmitted in one of an RRS message, user data and downlink control information.

In another aspect of the present invention, a method for communicating information in a mobile communication system is provided. The method includes a mobile communication terminal transmitting a preamble over a random access channel (RACH), a network generating an identifier according to the preamble and an indicator corresponding the identifier, the network transmitting a response to the preamble, the response including the identifier and the indicator and the mobile communication terminal transmitting data using the identifier and indicator.

It is contemplated that the network generates the identifier according to at least one of a signature and a RACH occasion in the preamble. It is further contemplated that the identifier includes one of a random identifier (random Id), a MAC identifier (MAC Id), a cell-radio network temporary identity (C-RNTI) and a packet-temporary mobile subscriber identity (P-TMSI).

It is contemplated that the method further includes the network using the identifier and indicator in the received data to determine that the data was received form the mobile communication terminal. It is further contemplated that the mobile communication terminal transmits the data in one of an RRC message, user data and uplink control information.

It is contemplated that the method further includes the network transmitting a response to the data including the identifier, the indicator and a C-RNTI. It is further contemplated that network transmits the response in one of an RRS message, user data and downlink control information.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### Advantageous Effects

According to the present invention, it is possible to transmit/receive reliable data while reducing collision among transmissions from UEs by providing a method for efficiently using an identifier of an UE when the UE uses a RACH and a method for using an indicator when using the identifier.

### Brief Description of the Drawings

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.
FIG. 1 is a block diagram illustrating a communication network.
FIG. 2 is a block diagram illustrating a control plane of a radio interface protocol.
FIG. 3 is a block diagram illustrating a user plane of a radio interface protocol.
FIG. 4 illustrates an example of a physical random access channel (PRACH).
FIG. 5 illustrates downlink scheduling information.
FIG. 6 illustrates an uplink scheduling grant.
FIG. 7 is a flowchart illustrating a method for avoiding collision according to an embodiment of the present invention.

### Best Mode for Carrying Out the Invention

Hereinafter, exemplary embodiments of the present invention will be described with reference to the attached drawings. Like reference numerals in the drawings denote like elements throughout the whole specification.

When a UE 10 is turned on, it attempts to access a new cell via the RACH. The UE 10 receives the system information from the cell in synchronization with a downlink channel.

After receiving the system information, the UE 10 must transmit an access request message for RRC connection. However, the RACH is used since the UE 10 is not synchronized with the current network and uplink radio resources are not ensured. The UE 10 requests allocation of radio resources, in order to transmit the access request message to the network using the RACH.

The eNode-B receives the radio resources request and allocates radio resources to the UE 10. The UE then transmits the RRC access message to the network using the allocated radio resources.

When a UE 10 is RRC-connected to the network, it receives the radio resources according to the scheduling of the radio resources from the network and transmits data to the network using the radio resources. The network no longer allocates the uplink radio resources to the UE 10 when no data for transmission is left in a buffer of the UE because it is inefficient that uplink radio resources are allocated to a UE having no data for transmission.

The buffer state of the UE 10 is reported to the network according to periods or occurrence of an incident. When new data is received in the buffer of a UE 10 having no radio resources, the UE uses the RACH because the UE has no allocated uplink radio resources. The UE 10 requests allocation of the radio resources necessary for transmitting the data to the network using the RACH.

The RACH of the WCDMA will be described. The RACH is used to transmit short-length data in the uplink direction.

A portion of an RRC message, such as an RRC connection request message, a cell update message, and an URA update message, is transmitted via the RACH. A logical channel, such as a common control channel (CCCH), a dedicated control channel (DCCH), and a dedicated traffic channel (DTCH) may be mapped to RACH. The RACH may be mapped to a physical channel, such as a physical random access channel (PRACH).

FIG. 4 is a view showing an example of the PRACH. As illustrated in FIG. 4, the PRACH, which is uplink physical channel, may include a preamble portion and a message portion.

The preamble portion performs a power ramping function for adjusting transport power used to transmit a message and a function for avoiding collision among transmissions from several UEs 10. The message portion performs a function for transmitting an MAC protocol data unit (PDU) sent from the MAC layer to the physical channel.

The physical layer selects one access slot and one signature and transmits the preamble portion of the PRACH in the uplink direction when the MAC layer of the UE 10 indicates the physical layer to transmit the PRACH. The preamble portion may be transmitted during the access slot interval having a length of 1.33 ms. One signature may be selected from among 16 signatures during a certain initial interval of the access slot.

The eNode-B may transmit a response signal via a downlink physical channel, such as an acquisition indicator channel (AICH) when the UE 10 transmits the preamble. The eNode-B transmits the response signal, which includes an acknowledgement (ACK) response or a non-acknowledgement (NACK) response, to the UE 10 via the AICH. The UE 10 transmits the message portion when it receives the ACK. The MAC layer of the UE 10 indicates the physical layer of the UE to transmit the PRACH after a predetermined time when it receives the NACK.

The UE 10 transmits a new preamble at power level that is higher than that of the previous preamble by one level after a designated access slot when it does not receive any response signal corresponding to the transmitted preamble.

A data transport signal or a control signal may be transmitted from the eNode-B to the UE 10 in addition to the preamble of the RACH. The control signal transmitted from the eNode-B to the UE includes downlink scheduling information, uplink scheduling grant and response information on the transmission of the preamble portion of the RACH.

An identifier is used to avoid collision among transmissions from the UEs 10 in the uplink or downlink direction. The eNode-B generates the identifier and transmits the identifier to the UE 10 and the UE transmits data using the identifier.

An indicator for identifying the identifiers may also be included when the UE uses the identifier in order to avoid collision between identifiers. The identifier may be used by the eNode-B to distinguish between the UEs 10 when the UE transmits the data or the control signal to the eNode-B. The indicator of the identifier may be used together with the identifier.

The eNode-B may transmit the data or the control signal to a specific UE 10 using the identifier. The indicator of the identifier may be used together with the identifier. The identifier may be required when the data is transmitted from the UE 10 to the eNode-B.

Hereinafter, the identifier and the indicator will be described. The identifier may be a random identifier (random Id), a MAC identifier (MAC Id), a cell-radio network temporary identity (C-RNTI) or a packet-temporary mobile subscriber identity (P-TMSI).

The random Id and the MAC Id may be used when using the RACH. The random Id or the MAC Id may have the same length as that of the C-RNTI.

For example, the random Id, the MAC ID and the C-RNTI may all have a length of 10 bits. Alternatively, only the MAC Id and the C-RNTI may have the same length.

The UE 10 and the eNode-B may generate the same random Id in accordance with a transmission occasion and the signature of the preamble part selected by the UE. For example, the UE 10 and the eNode-B may acquire the same random Id from information on the signature and the transmission occasion when the UE transmits the signature of the preamble part to the eNode-B via the transmission occasion once. The eNode-B informs the UE 10 of information for acquiring the random Id, such as information on the signature and the transmission occasion, via system information or a paging message.

The MAC Id may be an identifier used to identify the UE 10 in a specific cell before the eNode-B allocates the C-RNTI to the UE. The MAC Id may be acquired from the random Id.

The random Id and the MAC Id may be identical when the random Id has the same length as that of the C-RNTI. A Random Id may extend the MAC Id when the length of the random Id is less than that of the C-RNTI. The eNode-B informs the UE 10 how to acquire the MAC Id from the random Id via the system information or the paging message.

The C-RNTI is the identifier for identifying the UE 10 in one cell and is allocated and/or de-allocated by the eNode-B. The UE 10 may receive a new C-RNTI from the eNode-B when the UE enters a new cell. The MAC Id has the same length as that of the C-RNTI. The P-TMSI is an identifier for identifying the UE 10 in one CN and is allocated and/or de-allocated by the AG 30.

The indicator of the identifier distinguishes between the identifiers. The indicator distinguishes between the identifiers used in the RACH, such as the random Id, the MAC Id and the C-RNTI. The indicator is used to prevent the identifiers from colliding with each other when the length of the random Id or the MAC Id is identical to that of the C-RNTI.

For example, if the length of the MAC Id is identical to that of the C-RNTI and UE A has a C-RNTI having 8 bits in the current cell with a value of 1111 0000, UE B uses the RACH to access the cell. Additionally, if the MAC Id is acquired from the random Id and the MAC Id also has a length of 8 bits and the value of 1111 0000, the eNode-B tries to transmit the response information for the preamble part to UE B using the identifier.

However, UE A may erroneously receive the information transmitted to UE B since UE A also receives the information from the eNode-B using its identifier. Furthermore, since UE B uses the MAC Id before receiving the C-RNTI from the eNode-B, the eNode-B may not be able to determine whether the information is transmitted from UE A or UE B when UE B transmits specific information to the eNode-B using its identifier.

The indicator is used to distinguish between the random Id or MAC Id that identifies the UE 10 in the RACH and the C-RNTI or P-TMSI used for communication between the eNode-B and the CN in the cell. For example, a value of "0" may indicate the random Id or the MAC Id and a value of "1" may indicate the C-RNTI or the P-TMSI when the indicator has one bit.

Hereinafter, the transmitted identifier and indicator will be described. FIG. 5 illustrates downlink scheduling information. As illustrated in FIG. 5, the identifier and the indicator of the identifier are included in the downlink scheduling information of a control signal transmitted from the eNode-B to the UE 10.

As illustrated in FIG. 5, the eNode-B, the identifier and the indicator are transmitted to the UE 10 via a DL-SCCH. The UE 10 may transmit data or a control signal to the eNode-B using the indicator and the identifier when transmitting a next message.

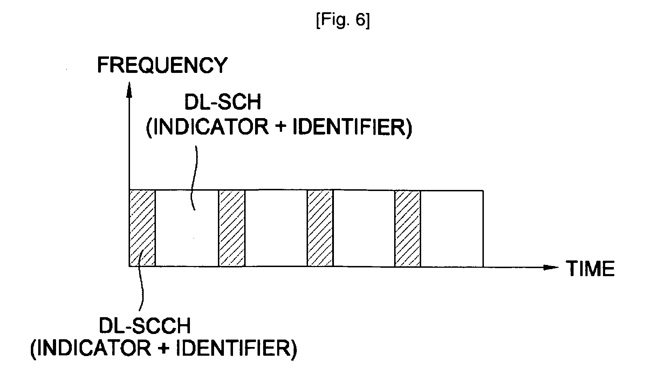

FIG. 6 illustrates an uplink scheduling grant. As illustrated in FIG. 6, the identifier and the indicator of the identifier are included in the uplink scheduling grant information of a control signal transmitted from the eNode-B to the UE 10.

As illustrated in FIG. 6, the eNode-B transmits the uplink scheduling grant information to the UE 10 via a DL-SCCH or a DL-SCH. The uplink scheduling grant information having different information may be transmitted through the DL-SCCH and the DL-SCH, respectively.

The identifier and the indicator of the identifier are transmitted to the UE 10 via the DL-SCCH or the DL-SCH. The UE 10 may transmit data or a control signal to the eNode-B using the identifier and the indicator transmitting a next message.

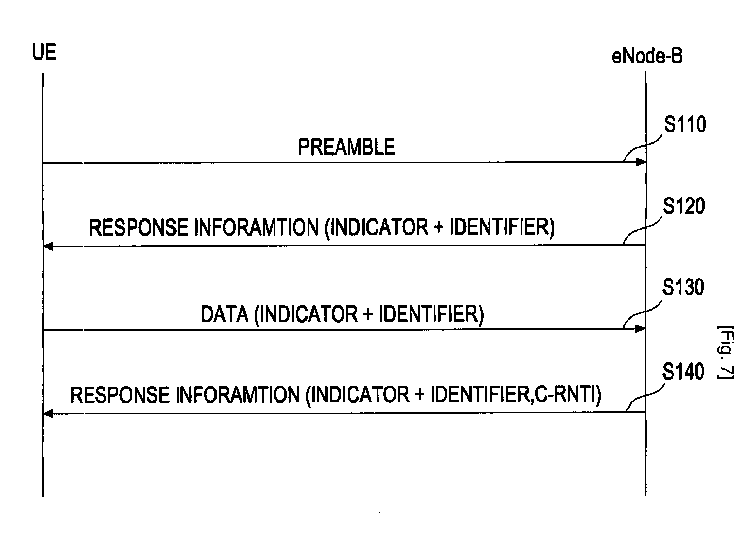

FIG. 7 is a flowchart illustrating a method for avoiding collision according to an embodiment of the present invention. FIG. 7 illustrates the identifier and the indicator of the identifier used when the UE 10 uses the RACH.

As illustrated in FIG. 7, the UE 10 transmits the preamble portion to the eNode-B using the selected signature and the transmission occasion (S110). The eNode-B transmits response information for the preamble portion to the UE (S120).

The response information may include an identifier, such as a MAC Id. The response information may further include an indicator for identifying the identifier.

The eNode-B acquires a random Id using the preamble portion and generates the MAC Id. The eNode-B and the UE 10 have the same MAC Id. The eNode-B informs the UE 10 of generating method of the MAC Id by the system information or the paging information.

The UE 10 receives the response information for the preamble portion and transmits data using radio resource allocation information included in the response information and the identifier, such as the MAC Id, and the indicator (S 130). The data may include the identifier, such as the MAC Id, and the indicator for identifying the identifier. The transmitted data may be an RRC message, user data or uplink control information.

The eNode-B transmits response information for the data received from the UE 10 (S140). The response information may include the identifier, such as the MAC Id, the indicator for identifying the identifier, and a C-RNTI used by the UE 10 in the cell. The response information may be an RRC message, user data or downlink control information.

The steps of a method described in connection with the embodiments disclosed herein may be implemented by hardware, software or a combination thereof. The hardware may be implemented by an application specific integrated circuit (ASIC) that is designed to perform the above function, a digital signal processing (DSP), a programmable logic device (PLD), a field programmable gate array (FPGA), a processor, a controller, a microprocessor, the other electronic unit, or a combination thereof. A module for performing the above function may implement the software. The software may be stored in a memory unit and executed by a processor. The memory unit or the processor may employ a variety of means that is well known to those skilled in the art.

As described above, according to the present invention, it is possible to transmit/ receive reliable data while reducing collision among transmissions from UEs by providing a method for efficiently using an identifier of an UE when the UE uses a RACH and a method for using an indicator when using the identifier.

As the present invention may be embodied in several forms, it should also be understood that the above-described embodiments are not limited by any of the details of the foregoing description, unless otherwise specified, but rather should be construed broadly within its spirit and scope as defined in the appended claims. Therefore, all changes and modifications that fall within the metes and bounds of the claims, or equivalence of such metes and bounds are intended to be embraced by the appended claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims.

Many alternatives, modifications, and variations will be apparent to those skilled in the art. In the claims, means-plus-function clauses are intended to cover the matter described herein as performing the recited function.

### Industrial Applicability

The present invention relates to wireless telecommunication network.

## Claims

1. A method for communicating information in a mobile communications system, the method comprising:
transmitting (S110), from a user equipment, hereinafter called UE, (10) to a base station, herein-after called BS, (20), a preamble over a random access channel RACH, the preamble is randomly selected from a plurality of preamble candidates;
receiving (S120), at the UE (10), a first response message from the BS (20) in response to the preamble, the first response message including a Medium Access Control MAC identifier MAC Id and a first indicator indicating that the MAC Id is included;
transmitting (S130), from the UE (10) to the BS (20), data including the MAC Id and the first indicator;
receiving (S140), at the UE (10), a second response message from the BS (20) in response to the data, the second response message including a UE identifier and a second indicator, the second indicator indicating that the UE identifier is included,
wherein the MAC Id is based on the preamble and is for identifying the preamble transmitted by the UE (10),
wherein the UE identifier is for identifying the UE (10) in a cell, and
wherein a bit length of the MAC Id is equal to a bit length of the UE identifier.

2. The method of claim 1, wherein the data is a Radio Ressource Control, RRC, message, user data or uplink control information.

3. The method of claim 1, wherein the second response message is a Radio Ressource Control, RRC, message, user data or downlink control information.

4. A method for communicating information in a mobile communication system, the method comprising:
receiving (S110), at a base station, hereinafter called BS, (20), a preamble from a user equipment, hereinafter called UE, (10) over a random access channel RACH;
transmitting (S120), from the BS (20) to the UE (10), a first response message in response to the preamble, the first response message including a Medium Access Control MAC identifier MAC Id and a first indicator, the first indicator indicating that the MAC Id is included; and
receiving (130), at the BS (20), data transmitted from the UE (10), the data including the MAC Id and the first indicator;
transmitting (S140), from the BS (20) to the UE (10), a second response message in response to the received data, the second response message including a UE identifier and a second indicator, the second indicator indicating that the UE identifier is included,
wherein the MAC Id is obtained based on the preamble and is for identifying the preamble,
wherein the UE identifier is assigned by the BS and is for identifying the UE (10) in a cell served by the BS (20), and
wherein a bit length of the MAC Id is equal to a bit length of the UE identifier.

5. The method of claim 4, wherein the data is a Radio Resource Control, RRC, message, user data or uplink control information.

6. The method of claim 4, wherein the second response message is a Radio Resource Control, RRC, message, user data or downlink control information.

7. The method of claim 1, wherein the bit length of the MAC Id is 10 bits.

8. The method of claim 4, wherein the bit length of the MAC Id is 10 bits.

9. A user equipment, hereinafter called UE, (10) for communicating information in a mobile communication system, the UE (10) comprising a processor configured to:
transmit (S110), to a base station, hereinafter called BS, (20), a preamble over a random access channel RACH, the preamble is randomly selected from a plurality or preamble candidates;
receive (S120) a first response message from the BS (20) in response to the preamble, the first response message including a Medium Access Control MAC identifier MAC Id and a first indicator, the first indicator indicating that the MAC Id is included;
transmit (S130)), to the BS (20), data including the MAC Id and the first indicator;
receive (S 140) a second response message from the BS (20) in response to the data, the second response message including an UE identifier and a second indicator, the second indicator indicating that the UE identifier is included,
wherein the MAC Id is based on the preamble and is for identifying the preamble transmitted by the UE (10),
wherein the UE identifier is for identifying the UE (10) in a cell, and wherein a bit size of the MAC Id is equal to a bit size of the UE identifier.

## Patentansprüche

1. Verfahren zum Kommunizieren von Informationen in einem Mobilkommunikationssystem, wobei das Verfahren umfasst:
Senden (S110) von einem Anwendergerät, nachstehend als UE bezeichnet, (10) zu einer Basisstation, nachstehend als BS bezeichnet, (20) eines Vorspanns über einen Direktzugriffskanal, RACH, wobei der Vorspann zufällig aus mehreren Vorspannkandidaten ausgewählt ist;
Empfangen (S120) in dem UE (10) einer ersten Antwortnachricht von der BS (20) in Reaktion auf den Vorspann, wobei die erste Antwortnachricht eine Medienzugangssteuerkennung, MAC-Id, und ein erstes Kennzeichen, das angibt, dass die MAC-Id enthalten ist, enthält;
Senden (S130) von dem UE (10) zu der BS (20) von Daten, die die MAC-Id und das erste Kennzeichen enthalten;
Empfangen (S140) in dem UE (10) einer zweiten Antwortnachricht von der BS (20) in Reaktion auf die Daten, wobei die zweite Antwortnachricht eine UE-Kennung und ein zweites Kennzeichen enthält, wobei das zweite Kennzeichen angibt, dass die UE-Kennung enthalten ist,
wobei die MAC-Id auf dem Vorspann basiert und zum Identifizieren des durch das UE (10) gesendeten Vorspanns dient,
wobei die UE-Kennung zum Identifizieren des UE (10) in einer Zelle dient, und
wobei eine Bitlänge der MAC-Id gleich einer Bitlänge der UE-Kennung ist.

2. Verfahren nach Anspruch 1, wobei die Daten eine Funkbetriebsmittelsteuernachricht, RRC-Nachricht, Anwenderdaten oder Aufwärtsstreckensteuerinformationen sind.

3. Verfahren nach Anspruch 1, wobei die zweite Antwortnachricht eine Funkbetriebsmittelsteuemachricht, RRC-Nachricht, Anwenderdaten oder Abwärtsstreckensteuerinformationen ist.

4. Verfahren zum Kommunizieren von Informationen in einem Mobilkommunikationssystem, wobei das Verfahren umfasst:
Empfangen (S110) in einer Basisstation, nachstehend als BS bezeichnet, (20) eines Vorspanns von einem Anwendergerät, nachstehend als UE bezeichnet, (10), über einen Direktzugriffskanal RACH;
Senden (S120) von der BS (20) zu dem UE (10) einer ersten Antwortnachricht in Reaktion auf den Vorspann, wobei die erste Antwortnachricht eine Medienzugangssteuerkennung MAC-Id und ein erstes Kennzeichen enthält, wobei das erste Kennzeichen angibt, dass die MAC-Id enthalten ist; und
Empfangen (130) in der BS (20) von Daten, die von dem UE (10) gesendet werden, wobei die Daten die MAC-Id und das erste Kennzeichen enthalten;
Senden (S 140) von der BS (20) zu dem UE (10) einer zweiten Antwortnachricht in Reaktion auf die empfangenen Daten, wobei die zweite Antwortnachricht eine UE-Kennung und ein zweites Kennzeichen enthält, wobei das zweite Kennzeichen angibt, dass die UE-Kennung enthalten ist,
wobei die MAC-Id basierend auf dem Vorspann erhalten wird und zum Identifizieren des Vorspanns dient,
wobei die UE-Kennung durch die BS zugewiesen wird und zum Identifizieren des UE (10) in einer durch die BS (20) bedienten Zelle dient, und
wobei eine Bitlänge der MAC-Id gleich einer Bitlänge der UE-Kennung ist.

5. Verfahren nach Anspruch 4, wobei die Daten eine Funkbetriebsmittelsteuernachricht, RRC-Nachricht, Anwenderdaten oder Aufwärtsstreckensteuerinformationen sind.

6. Verfahren nach Anspruch 4, wobei die zweite Antwortnachricht eine Funkbetriebsmittelsteuemachricht, RRC-Nachricht, Anwenderdaten oder Abwärtsstreckensteuerinformationen ist.

7. Verfahren nach Anspruch 1, wobei die Bitlänge der MAC-Id 10 Bits ist.

8. Verfahren nach Anspruch 4, wobei die Bitlänge der MAC-Id 10 Bits ist.

9. Anwendergerät, nachstehend als UE bezeichnet, (10) zum Kommunizieren von Informationen in einem Mobilkommunikationssystem, wobei das UE (10) einen Prozessor umfasst, der konfiguriert ist:
zu einer Basisstation, nachstehend als BS bezeichnet, (20) einen Vorspann über einen Direktzugriffskanal RACH zu senden (S110), wobei der Vorspann zufällig aus mehreren Vorspannkandidaten ausgewählt ist,
eine erste Antwortnachricht von der BS (20) in Reaktion auf den Vorspann zu empfangen (S120), wobei die erste Antwortnachricht eine Medienzugangssteuerkennung, MAC-Id, und ein erstes Kennzeichen enthält, wobei das Kennzeichen angibt, dass die MAC-Id enthalten ist;
Daten, die die MAC-Id und das erste Kennzeichen enthalten, zu der BS (20) zu senden (S 130);
eine zweite Antwortnachricht von der BS (20) in Reaktion auf die Daten zu empfangen (S 140), wobei die zweite Antwortnachricht eine UE-Kennung und ein zweites Kennzeichen enthält, wobei das zweite Kennzeichen angibt, dass die UE-Kennung enthalten ist,
wobei die MAC-Id auf dem Vorspann basiert und zum Identifizieren des durch das UE (10) gesendeten Vorspanns dient,
wobei die UE-Kennung zum Identifizieren des UE (10) in einer Zelle dient und wobei eine Bitgröße der MAC-Id gleich einer Bitgröße der UE-Kennung ist.

## Revendications

1. Procédé de communication d'informations dans un système de communication mobile, le procédé comprenant :
la transmission (S110), à partir d'un équipement utilisateur, UE (10), à destination d'une station de base, BS (20), d'un préambule sur un canal d'accès aléatoire, RACH, le préambule étant sélectionné aléatoirement parmi une pluralité de préambules candidats ;
la réception (S120), au niveau de l'UE (10), d'un premier message de réponse provenant de la BS (20) en réponse au préambule, le premier message de réponse comprenant un identifiant de commande d'accès au support, MAC Id, et un premier indicateur indiquant que le MAC Id est inclus ;
la transmission (S130), de l'UE (10) à la BS (20) de données comprenant le MAC Id et le premier indicateur ;
la réception (S140), au niveau de l'UE (10), d'un deuxième message de réponse provenant de la BS (20) en réponse aux données, le deuxième message de réponse comprenant un identifiant d'UE et un deuxième indicateur, le deuxième indicateur indiquant que l'identifiant d'UE est inclus,
dans lequel le MAC Id est basé sur le préambule et est destiné à identifier le préambule transmis par l'UE (10),
dans lequel l'identifiant d'UE est destiné à identifier l'UE (10) dans une cellule, et
dans lequel une longueur binaire du MAC Id est égale à une longueur binaire de l'identifiant d'UE.

2. Procédé selon la revendication 1, dans lequel les données sont un message de commande de ressources radio, RRC, des données d'utilisateur ou des informations de commande de liaison montante.

3. Procédé selon la revendication 1, dans lequel le deuxième message de réponse est un message de commande de ressources radio, RRC, des données d'utilisateur ou des informations de commande de liaison descendante.

4. Procédé de communication d'informations dans un système de communication mobile, le procédé comprenant :
la réception (S110), à une station de base, BS (20), d'un préambule provenant d'un équipement utilisateur, UE (10), sur un canal d'accès aléatoire, RACH ;
la transmission (S120), de la BS (20) à l'UE (10), d'un premier message de réponse en réponse au préambule, le premier message de réponse comprenant un identifiant de commande d'accès au support, MAC Id, et un premier indicateur, le premier indicateur indiquant que le MAC Id est inclus ; et
la réception (S130), à la BS (20), de données transmises à partir de l'UE (10), les données comprenant le MAC Id et le premier indicateur ;
la transmission (S140), de la BS (20) à l'UE (10), d'un deuxième message de réponse en réponse aux données reçues, le deuxième message de réponse comprenant un identifiant d'UE et un deuxième indicateur, le deuxième indicateur indiquant que l'identifiant d'UE est inclus,
dans lequel le MAC Id est obtenu sur la base du préambule et est destiné à identifier le préambule,
dans lequel l'identifiant d'UE est affecté par la BS et est destiné à identifier l'UE (10) dans une cellule desservie par la BS (20), et
dans lequel une longueur binaire du MAC Id est égale à une longueur binaire de l'identifiant d'UE.

5. Procédé selon la revendication 4, dans lequel les données sont un message de commande de ressources radio, RRC, des données d'utilisateur ou des informations de commande de liaison montante.

6. Procédé selon la revendication 4, dans lequel le deuxième message de réponse est un message de commande de ressources radio, RRC, des données d'utilisateur ou des informations de commande de liaison descendante.

7. Procédé selon la revendication 1, dans lequel la longueur binaire du MAC Id est 10 bits.

8. Procédé selon la revendication 4, dans lequel la longueur binaire du MAC Id est 10 bits.

9. Equipement utilisateur, UE (10), destiné à communiquer des informations dans un système de communication mobile, l'UE (10) comprenant un processeur configuré pour effectuer :
la transmission (S110), à une station de base, BS (20), d'un préambule sur un canal d'accès aléatoire, RACH, le préambule étant sélectionné aléatoirement parmi une pluralité de préambules candidats ;
la réception (S120) d'un premier message de réponse provenant de la BS (20) en réponse au préambule, le premier message de réponse comprenant un identifiant de commande d'accès au support, MAC Id, et un premier indicateur, le premier indicateur indiquant que le MAC Id est inclus ;
la transmission (S130), à la BS (20), de données comprenant le MAC Id et le premier indicateur ;
la réception (S140) d'un deuxième message de réponse provenant de la BS (20) en réponse aux données, le deuxième message de réponse comprenant un identifiant d'UE et un deuxième indicateur, le deuxième indicateur indiquant que l'identifiant d'UE est inclus,
dans lequel le MAC Id est basé sur le préambule et est destiné à identifier le préambule transmis par l'UE (10),
dans lequel l'identifiant d'UE est destiné à identifier l'UE (10) dans une cellule, et dans lequel une taille binaire du MAC Id est égale à une taille binaire de l'identifiant d'UE.
